# EUROPEAN PATENT APPLICATION

(11) **EP 3 104 122 A1**
(43) Date of publication of application: **14.12.2016**
(21) Application number: 15305914.2
(22) Date of filing: 12.06.2015
(51) Int. Cl.: G01C 21/34, B60R 16/023, G01C 21/36, G01C 23/00, G08G 5/00

(54) **ENERGY MANAGEMENT SYSTEM FOR VEHICLES**

(71) Applicant: Ecole Nationale de l'Aviation Civile, 31400 Toulouse Cedex (FR)
(72) Inventor: PUJOS, Matthieu, 31400 TOULOUSE (FR); BENHACENE, Raïlane, 31000 TOULOUSE (FR); GASPARD-BOULINC, Hélène, 31400 TOULOUSE (FR); LOUVIOT, Denis, 31770 COLOMIERS (FR); VINOT, Jean-Luc, 31400 TOULOUSE (FR)
(74) Representative: Nguyen Van Yen, Christian

(57) **Abstract**

The invention discloses a vehicle management system which is energy centric. The system may be configured to operate on a terrestrial vehicle, a nautical or on an aerial vehicle. It is configured to allow a user input a route comprising legs, each leg associated with an activity and an energy consumption mode. The system captures parameters from sensors to compute a position of the vehicle and a predicted energy consumption per leg. The system comprises a display unit which associates graphically the activities and their energy consumptions. It allows the user to simulate what if scenarios, to visualize the impact of modifications of some of the parameters of energy consumption on an energy/time/range budget.

## Description

### FIELD OF THE INVENTION

The present invention applies to the field of vehicle energy management systems. More specifically, the invention allows a pilot or a driver to plan and adjust his/her activities during a travel.

### BACKGROUND

Terrestrial, nautical and aerial vehicles powered with one or more fuel engines have been equipped almost from start with gauges to display to their driver/pilot an indication of the level of fuel in the tank(s). For long, making sure that the vehicle had enough fuel to execute its travel plan was left to the driver/pilot. Of course, this task is more critical for aircraft because in-flight refueling is limited to bombers or combat aircraft. Information on flight time/distance authorized with available fuel (i.e. endurance or autonomy) has long been provided to pilots on the dashboard or the cockpit display unit. The prediction is not too difficult for commercial airliners for which the route and flight parameters do not undergo a lot of variations, except from meteorological conditions, which can be predicted as well, at least short term.

The technology is also available on automotive vehicles, although an accurate prediction of the range that a vehicle will be capable of travelling on a route is more difficult because instantaneous energy consumption will be heavily dependent notably upon the profile of the road to be travelled, the traffic conditions and the driving style.

Being capable of providing reliable endurance predictions to a driver of an automobile has become a much more important issue when the automobile is powered by an electrical engine. This is because the autonomy of these vehicles is still rather low, as is the density of recharging stations, while the time needed for recharge is quite high. Solutions to this class of problem have been thought of, notably by using the information available from the car navigation system. An example of such a solution is disclosed by US patent with n° US 8,594,918. But the system disclosed by this document does not allow a driver to easily plan a travel with a plurality of activities, which may be more or less critical or of a higher or lower priority, and to execute 'what if' simulations to be able to make the best informed decision on the optimum allowable travel plan, either at the preparation stage or en-route.

Also, electric aircraft are now developed, and energy management becomes more safety critical, while the pilots will still be overwhelmed by the existing safety parameters. In the avionics field, it also therefore becomes all the more important to change the paradigm of energy management and make it more activity based, so that a pilot can easily determine the activities that he or she can decide to safely perform in his/her flight plan within the remaining autonomy of the aircraft.

### SUMMARY OF THE INVENTION

It is an object of the invention to provide these improvements over the prior art.

It achieves this goal by providing a vehicle route management system with a capability to allocate an energy resource to an activity of the vehicle, monitor and adapt activity planning and jointly display the forecast and actual allocation.

To this effect, the invention discloses a vehicle route management system comprising: A) a user input interface configured to allow the user to input a route with a plurality of waypoints, said waypoints defining segments, each segment associated with an activity and an energy consumption mode; B) a plurality of sensors configured to provide in real time a position of the vehicle relative to the route, an amount of remaining energy and measurements of variables impacting instantaneous energy consumption; C) a calculation unit configured to: i) associate a predicted energy consumption to each segment of the route, based on vehicle features, segment features and the energy consumption mode associated by the user with the segment; ii) compute a predicted total energy consumption for the route; iii) adjust the predicted energy consumption associated to each segment of the route and the total energy consumption for the route based on outputs from the plurality of sensors; D) a display unit configured to present to the user outputs of the calculation unit and outputs of the some of the plurality of sensors; wherein the display unit is further configured to graphically present to the user the predicted total energy consumption for the route by activity.

Advantageously, the calculation unit is further configured to simulate an impact of a modification of the inputs on the predicted total energy consumption for the route by activity.

Advantageously, the user input interface comprises one or more of a keyboard, a press button, a wheel, a pedal, a mouse, a ball, a joystick, a tactile area on the display unit, a vocal interface.

Advantageously, the user input interface for inputting the energy consumption mode is one or more of a press button, a wheel, a pedal, a mouse, a ball, a joystick.

Advantageously, the energy consumption mode is a discrete value.

Advantageously, the energy consumption mode is one of a continuous value and a semi-continuous value.

Advantageously, at least one of the energy consumption mode and the activity associated to a segment has default values.

Advantageously, the plurality of sensors comprises a GNSS receiver,

Advantageously, the calculation unit is further configured to use as input a history of routes previously travelled by the vehicle with the user or another user.

Advantageously, the display unit comprises two gauges, one for displaying information on preset power and instantaneous power and one for displaying information on energy consumption.

Advantageously, the calculation unit is further configured to simulate an allocation of a cost budget to a selection of activities, wherein said cost budget is a weighted combination of energy, time and range.

Advantageously, the vehicle is an automotive vehicle.

Advantageously, the predicted energy consumption of a segment depends on at least one of a vertical profile of the segment, current traffic conditions on the segment, predicted traffic conditions on the segment, a driving style of the user.

Advantageously, the calculation unit is further configured to compute a remaining autonomy at each refueling station on the route and a travel time for the route taking into account refueling time.

Advantageously, the calculation unit takes into account at least one of an age of the vehicle, a maintenance status of the vehicle, an age of roads on the route, a maintenance status of the road.

Advantageously, the vehicle is a flying vehicle.

Advantageously, the user input interface is an interface of a flight management system of the flying vehicle.

Advantageously, an activity on a segment is selected in a list comprising taxiing, climbing, cruising, exercising, descending, approaching, landing and diverting.

Advantageously, the plurality of sensors comprises an anemometer and a temperature sensor.

Advantageously, the calculation unit takes into account at least one of predicted wind, predicted temperature, actual wind and actual temperature to compute the predicted and actual energy consumptions on a segment.

The invention also discloses a method a method for managing a route of a vehicle, said method comprising: A) having a user input in a user input interface a route with a plurality of waypoints, said waypoints defining segments, each segment associated with an activity and an energy consumption mode; B) capturing from a plurality of sensors a real time a position of the vehicle relative to the route, an amount of remaining energy and measurements of variables impacting instantaneous energy consumption; C) causing a calculation unit to: i) associate a predicted energy consumption to each segment of the route, based on vehicle features, segment features and the energy consumption mode associated by the user with the segment; ii) compute a predicted total energy consumption for the route; iii) adjust the predicted energy consumption associated to each segment of the route and the total energy consumption for the route based on outputs from the plurality of sensors; D) presenting to the user on a display unit outputs of the calculation unit and outputs of some of the plurality of sensors; wherein the presenting comprises graphically presenting to the user the predicted total energy consumption for the route by activity.

The invention also discloses a computer program for managing a route of a vehicle when executed on a computer, comprising: A) user input interface components configured to allow a user to input a route with a plurality of waypoints, said waypoints defining segments, each segment associated with an activity and an energy consumption mode; B) sensor processing instructions configured for capturing from a plurality of sensors a real time a position of the vehicle relative to the route, an amount of remaining energy and measurements of variables impacting instantaneous energy consumption; C) data processing instructions configured to: i) associate a predicted energy consumption to each segment of the route, based on vehicle features, segment features and the energy consumption mode associated by the user with the segment; ii) compute a predicted total energy consumption for the route; iii) adjust the predicted energy consumption associated to each segment of the route and the total energy consumption for the route based on outputs from the plurality of sensors; D) presentation components configured to present to the user on a display unit outputs of the data processing instructions and outputs of some of the plurality of sensors; wherein the presentation components are further configured to graphically present to the user the predicted total energy consumption for the route by activity.

The invention also discloses a vehicle route management unit comprising : A) an interface to a user input interface configured to allow the user to input a route with a plurality of waypoints, said waypoints defining segments, each segment associated with an activity and an energy consumption mode; B) an interface to a plurality of sensors configured to provide in real time a position of the vehicle relative to the route, an amount of remaining energy and measurements of variables impacting instantaneous energy consumption; C) a calculation unit configured to: i) associate a predicted energy consumption to each segment of the route, based on vehicle features, segment features and the energy consumption mode associated by the user with the segment; ii) compute a predicted total energy consumption for the route; iii) adjust the predicted energy consumption associated to each segment of the route and the total energy consumption for the route based on outputs from the plurality of sensors; D) an interface to a display unit configured to present to the user outputs of the calculation unit, outputs of some of the plurality of sensors and graphical views of the predicted total energy consumption for the route by activity.

Thanks to the invention, the psychological burden of energy management on the driver/pilot is greatly eased. The invention allows the driver/pilot to better anticipate the evolution of the consumption of energy and therefore to be more precise in deciding his/her course of action. Also, a more efficient use of energy can be achieved, since rules to prioritize the allocation of energy to activities can be defined by the user. For private cars, this feature can be used by the driver to optimize his/her daily trips, save time and/or money and contribute to the containment of the ecological footprint. For commercial and public transportation vehicles, the invention brings the capability to drivers and vehicle fleets managers to reduce the downtime, i.e. to make sure that a time/range/energy budget is allocated in an optimized manner.

### BRIEF DESCRIPTION OF THE DRAWINGS

The invention will be better understood and its various features and advantages will become apparent from the description of various embodiments and of the following appended figures :
- Figures 1 a and 1 b represent two car dashboards of the prior art with energy management indications;
- Figures 2a and 2b represent two aircraft displays of the prior art with energy management indications;
- Figure 3 represents a car dashboard with indications of a planned route in a disclosure of the prior art;
- Figure 4a represents a typical airline flight trajectory and Figure 4b represents a typical training flight trajectory;
- Figure 5 displays an energy gauge with allocation of future energy consumption to a set of activities of the vehicle, according to a number of embodiments of the invention;
- Figure 6 represents a functional architecture of a vehicle energy management system in a number of embodiments of the invention in different types of vehicles;
- Figure 7 represents a functional architecture of a vehicle energy management system in a number of embodiments of the invention in automotive vehicles;
- Figures 8a to 8d represent a car navigation display with energy gauges in different configurations;
- Figure 9 represents a functional architecture of a vehicle energy management system in a number of embodiments of the invention in aerospace vehicles;
- Figure 10 represents a cockpit display unit with an embodiment of the invention;
- Figure 11 represents the gauge of figure 5 with a match to the activities of a typical training flight;
- Figure 12 represents the gauge of figure 11 with different energy consumption modes.

### DETAILED DESCRIPTION

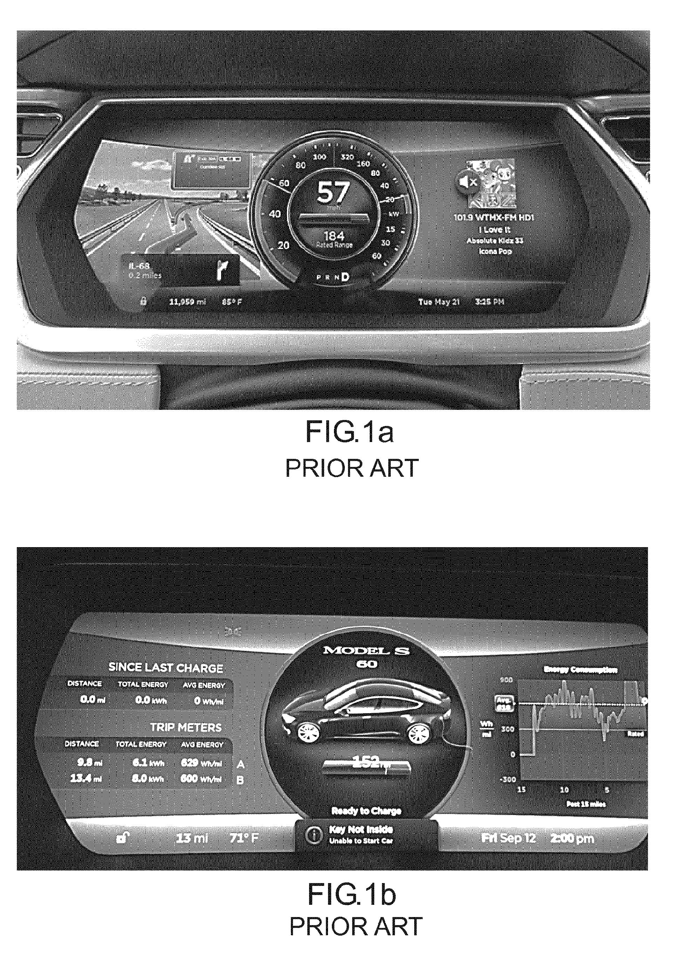

Figures 1 a and 1 b represent two car dashboards of the prior art with energy management indications.

Credit is given for the figures to Tesla™: the dashboards are those of its Model S electrical car.

Figure 1 a displays only one energy consumption information, which is the Rated range, i.e. which is a proprietary definition of a range which can be attained at a consumption rate which is set by the automotive manufacturer.

Figure 1b gives specific and detailed information from two different initializations: distance from initialization; total energy consumed (in kWh); average energy consumed (in kWh/mi).

These dashboards are quite nice looking but in terms of operational assistance, they do not generally bring more information to the driver than the remaining energy quantity (in liters for fuel powered vehicles or in kWh for electric vehicles), possibly as a percentage of full charge, and the total distance which can be travelled with this remaining energy.

When this last information is provided, generally an assumption of consumption is made (current consumption averaged on a time window, for instance), but this assumption is left implicit, which makes the information without much use to the driver.

Also the type of itinerary (lowland or highland) and traffic conditions ahead of the vehicle are not integrated in this kind of computation. As a result, the information given may be very misleading, because these two factors will significantly affect power consumption.

In a car equipped with a navigation system which receives traffic information, the data needed to calculate a true prediction of distance to zero charge would be available but, in the prior art, this data is not integrated to deliver to the user an accurate prediction of power consumption.

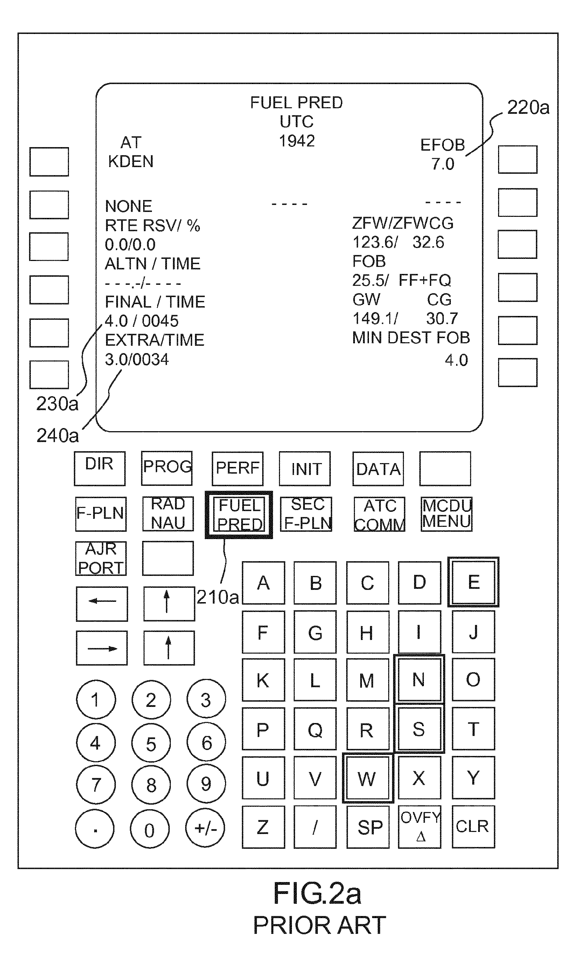

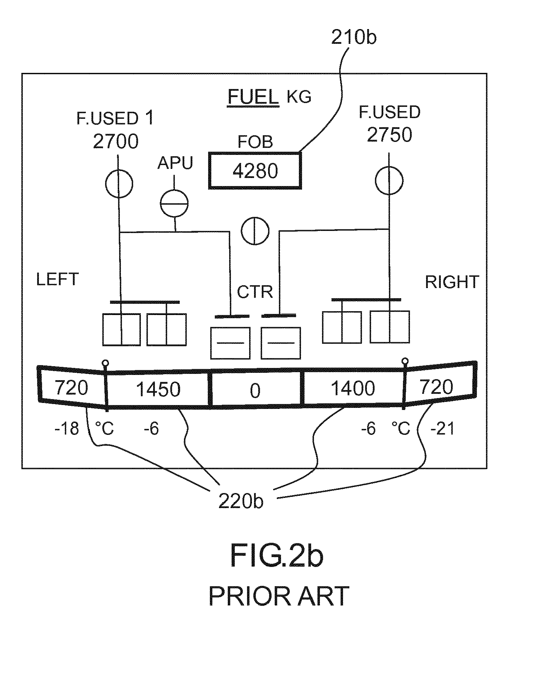

Figures 2a and 2b represent two aircraft displays of the prior art with energy management indications.

Figure 2a displays a view of a display unit of a flight management system (FMS) of a commercial airliner, which includes a Fuel Prediction function (Fuel Pred). The view displays the information given by the function, which can be activated by the pilot by pressing corresponding button 210a. Estimated fuel on board at destination is displayed at 220a (7.0 tons. Final reserve is set at 230a (4.0 tons). Captain's fuel margin (extra fuel) is at 240a (3.0 tons). When a flight plan is correctly set, the pilots can have the information of the fuel they will plan to burn in case of diversion.

Figure 2b displays a view of a fuel gauge of a commercial airliner. The gauge displays the total Fuel on Board, 210b, as well as the fuel in each tank, 220b.

There may be variations depending on the specifications of the aircraft vendor or the airliner, but the information above and its aspect are usually the ones which are provided.

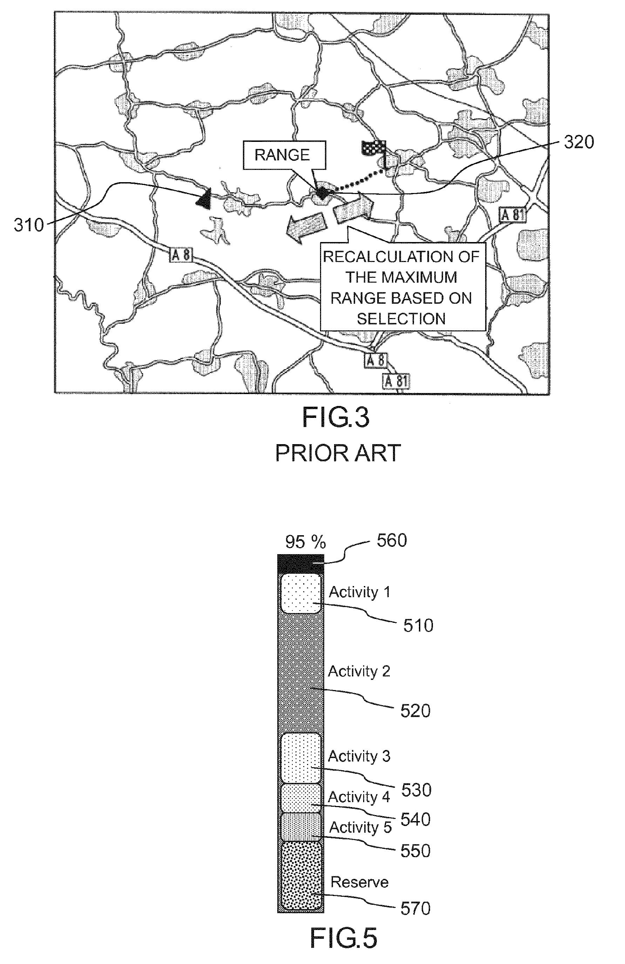

Figure 3 represents a car dashboard with indications of a planned route in a disclosure of the prior art.

In the method disclosed by US patent n° US8594918, an on-board computer calculates the point 320 on its trajectory that the car, 310, can travel with its available energy. The car navigation display displays this information. The system may recalculate the range and display the corresponding new reachable point on the trajectory, based on a modification of some assumptions, such as the driving mode (economy/standard/sport). But this system does not take into account the traffic conditions and does not allow to compute energy consumption for different segments of the trajectory. Nor does it allow the user to perform what if simulations. These are some of the limitations that the inventors of the instant application did encounter and have solved.

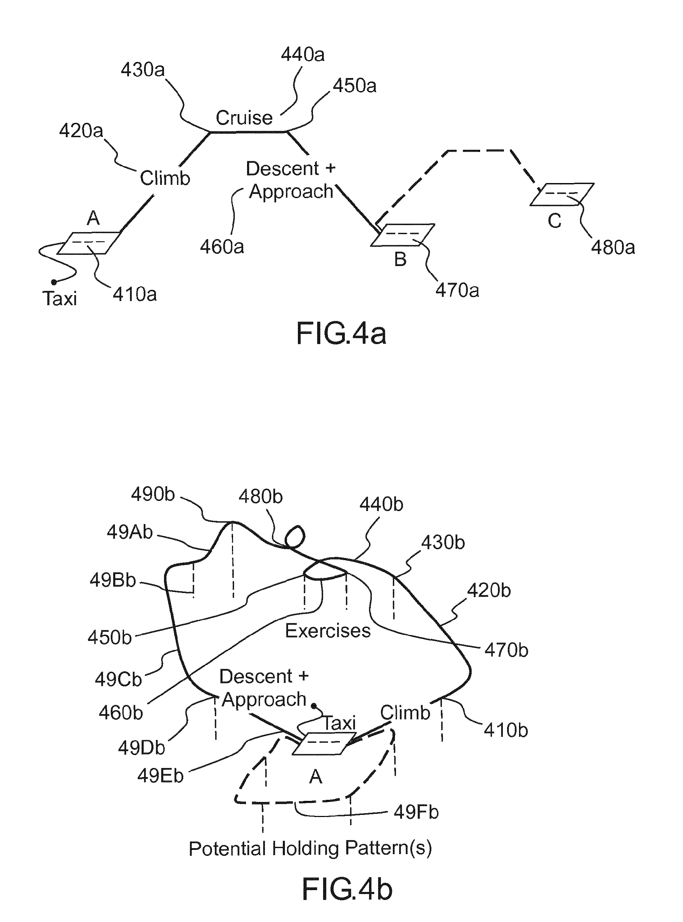

Figure 4a represents a typical airline flight trajectory and Figure 4b represents a typical training flight trajectory;

Figure 4a is a schematic representing three phases of a flight of a commercial airliner which has a departure airport A, 410a, and a destination airport B, 470a. After taxiing on airport A, the aircraft, during a climb phase, 420a, climbs to a point 430a (Top Of Climb) where the cruise phase, 440a, starts. The last phase starts at a Top Of Descent point, 450a, and consists in a descent and approach phase, 460a. If landing is not possible on airport B, 470a, the aircraft may be diverted to airport C, 480a (only if its remaining fuel allows the aircraft to fly three additional flight phases (climb, cruise, descent and approach) to reach airport C. Another variant would be to have the aircraft stay a definite period of time in a holding pattern above airport B.

In the current art available before this invention was made, it was not possible to easily calculate and get a synthetic view of predicted energy consumptions allocated by flight phase and, a fortiori, to easily simulate a 'what if' diversion scenario of the type illustrated on figure 4a.

Figure 4b is a schematic representing different phases of a flight of a training aircraft. In this use case, climb phase and descent plus approach phase do not change in comparison to a commercial aircraft flight plan. One or more holding patterns, 49Fb, above airport A can also be included as in the case of commercial airliners. But the main difference is the exercises phase which is the basic mission of a training aircraft. The exercises may be divided in a list of activities which, together with the other phases of the flight will form the activities of the mission of the training aircraft. The activities can be defined at various levels. In a number of embodiments, an activity may be defined as a leg in a flight plan, a leg being a segment of route connecting two waypoints on the trajectory of the aircraft. In the example depicted on figure 4b, the waypoints 410b, 430b, 450b, 470b, 490b, 49Bb, 49Db, are connected by legs 420b, 440b, 460b, 480b, 49Ab and 49Cb. The 49Eb leg is the final approach connecting the waypoint 49Db to the aerodrome A.

A purpose of the invention is to assist a pilot of any kind of aircraft, be it powered with fuel engines or with electric engines, in the planning of his/her mission by giving him/her indications about predicted energy consumption by activity allowing him to visualize most demanding activities and to re-plan his flight accordingly. Also, the invention provides the pilot with a 'what if' simulation capability whereby he/she is able to vary the energy consumption mode and/or the list of activities.

In the case of a car, a mission may be defined by the purpose of a trip. For instance, going from home to work, going to a vacation site, transporting travelers or merchandise from a departure site to a number of stops, etc... A number of routes are possible to reach a destination site. Each route will be subdivided in segments connecting stops or points of interest (such as recharging or refueling stations, toll stations, restaurants, hotels, sites to visit, etc...). Each segment of a possible route will then define an activity.

Figure 5 displays an energy gauge with allocation of future energy consumption to a set of activities of the vehicle, according to a number of embodiments of the invention.

According to an aspect of the invention, when a mission consisting of a list of activities, Activity 1, 510, Activity 2, 520, Activity 3, 530, Activity 4, 540, Activity 5, 550, is planned, the total predicted energy consumption (based on specific parameters depending from any of the vehicle, the route or the pilot/driver) is displayed, each zone of the gauge being allocated to an activity, with, possibly, a first additional zone allocated to the energy remaining after all activities have been performed, and a second additional zone being allocated to an energy reserve. In this case, current state-of-charge (SoC) is 95% and the activities will consume a percentage of 95%, displayed at area 560, of the available energy, excluding reserve, 570.

Advantageously, the surface of each zone of the gauge will be proportional to the proportion of the energy consumption allocated to the corresponding activity. In a number of embodiments, a color code and/or pictures can facilitate identification of types of activity and/or of their criticality.

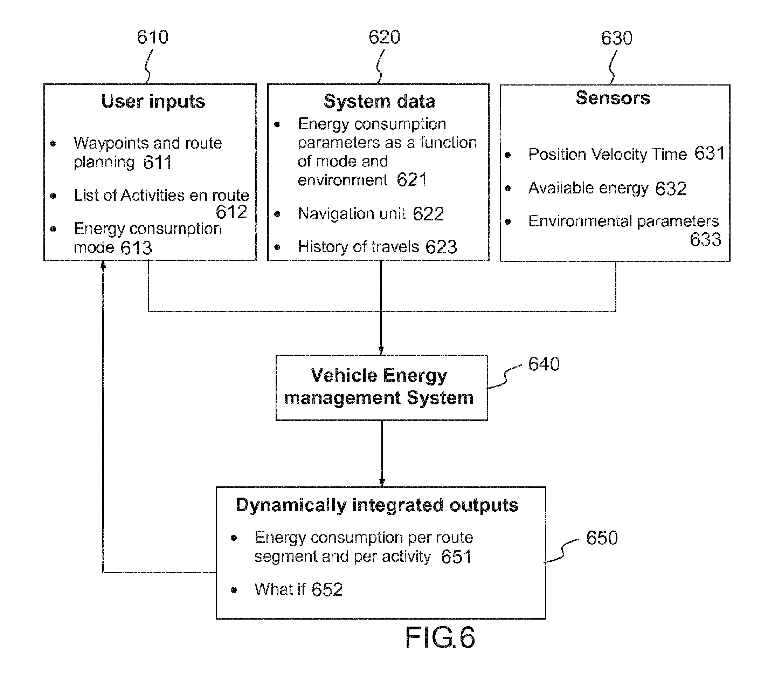

Figure 6 represents a functional architecture of a vehicle energy management system in a number of embodiments of the invention in different types of vehicles.

In a general construction of the invention a vehicle in which the invention may be implemented may be terrestrial, nautical or aerial.

The route management system of the invention comprises a user input interface, 610, whereby a user will be required to input a number of variables.

Input may be made using a data transfer from a file through a port of the computer, when data has been prepared in advance of the start of the mission. It can also be transferred through a network connection (wired or wireless). Input may also be made using a key board, a mouse, a joystick or a voice recognition interface. Part of the data to be input may use any of these data entry interfaces, or a combination thereof.

A first of the items to be entered is a route with a plurality of waypoints (611). Two successive waypoints define a "segment". A segment may be rectilinear or curvilinear. The user may be invited by the user interface to enter only a destination point and, optionally stops en-route. The user will be then proposed a number of possible routes. In an option, if the total available energy is not enough to reach the destination point, the system may calculate an itinerary which will stop by a recharge/re-fuelling station. Therefore, the user input interface may receive data from the system data repository and from sensors (for instance an energy level sensor).

A segment has an activity associated herewith (612). By default, the activity associated with a segment is going from the waypoint at the beginning of the segment to the waypoint at the end of the segment. An activity may be selected in types of activities, said types being dependent on the vehicle and the missions it performs.

According to the invention, an energy consumption mode (613) is associated with a segment. Energy consumption modes may be defined in a discrete manner, for example with two values, standard and economy, or three values, standard, economy and sport. Energy consumption modes may also be defined by a continuous variable, from a minimum percentage of total power level to maximum power level.

Optionally, entry of other data may be required from the user, for instance breaks after a predetermined maximum driving time, etc... Optionally, the amount of data that a user is requested to input may be minimal, for instance when a predetermined list of missions with preselected segments, activities and associated energy consumption have been previously entered, and the user only has to select in the list of missions the one he/she wants to execute now.

A system data repository 620 stores and updates data which are necessary or useful to enable the system of the invention to deliver its outputs. Notably, the system data will comprise energy consumption parameters, 621. The parameters may be stored in tables specific to a vehicle model, and possibly specific to the very vehicle in which the system is embedded. Indeed, energy consumption may vary with the precise configuration of the vehicle (engine, number of seats, tires, load, etc...), the age of the vehicle and the time elapsed from the last maintenance operation. The parameters will vary as a function of the energy consumption modes. Depending on the type of vehicle (see below), the energy consumption parameters will also vary with the vertical profile of the itinerary, the traffic density, the wind speed, the piloting or driving style. Therefore, the combinations of causes of variations of the energy consumption parameters may be very numerous. In an embodiment, it may be advantageous to use functional relationships between the parameters and the variables previously cited. In another embodiment, it may be advantageous to store the parameters in abaci (i.e; tables of parameters values), using interpolations between the values of the variables which define the parameters in the abaci. In another embodiment, computations may be based on a physical model and real-time simulation.

The system data repository 620 also comprises a navigation unit, 622, with a map of the areas to be travelled and a route management system, capable of computing a route from a departure point to a destination point with all waypoints in between which may be of interest to the user. The navigation unit may only accept inputs which are made while the user is on-board the vehicle. Or it may also accept inputs transferred from a memory or from a computing device via a wired or a wireless connection, where these inputs have been prepared out of the vehicle and before the start of the mission. The navigation unit should be able to compute a number of possible routes based on a distance, time or energy optimization algorithm (or any combination thereof).

The system data repository 620 may also comprise a history of previous travels of the vehicle, 623, possibly classified by driver/pilot and time referenced.

Of course, other system data may be useful to implement the invention, for instance data from the electronic control unit diagnosis in a car or from the control systems of an aircraft (like for instance total weight on takeoff).

The route management system of the invention also comprises sensors, 630. The sensors should be capable of acquiring a Position Velocity and Time (PVT) of the vehicle (631). Often times, it will be a GNSS positioning receiver. Such a receiver is configured to process the navigation signals received from a number of satellites of one or more constellations (GPS, Glonass, Beidou, Galileo, etc...), calculating a pseudo-range between the receiver and each satellite and then calculating a PVT from a minimum of four satellites. Depending on the configuration of the receiver, the relative position of the satellites and the receiver, the conditions of reception, the use of corrections, the precision of the calculation of the PVT may vary from 10m down to 1 cm. To increase the precision, the GNSS positioning receiver may be aided by an inertial navigation system using accelerometers, gyroscopes and magnetometers to propagate a GNSS position. Also positioning on a map will increase the precision of the position, if the map is very precise. An alternative positioning system could be based on a LPS (Local Positioning System) network.

Sensors also comprise an energy level gauge, 632, which delivers an absolute level of the remaining energy. In case there are a plurality of tanks or batteries, like on an aircraft, there will be a gauge for each tank or battery.

There should also be sensors 633 which measure environmental parameters which heavily impact energy consumption like actual slope of the road or actual traffic for a car (to be compared with the ones predicted by the navigation unit) and instantaneous wind. The environmental parameters may also come from an information channel accessed through a wireless communication channel, for instance meteorological data (actual or predicted).

The invention will be implemented in a vehicle energy management computer, 640. The computer may be a dedicated hardware with a specific software implementing the methods of the invention. Or it may be a specific software running on a computer which is dedicated to another task on the vehicle. Given the integration of the data and calculations of the invention with the navigation data, it may make sense to implement the energy management functions in the hardware which handles the route planning and navigation functions of the vehicle. In an aircraft, this will normally be the flight management computer (FMC). In a terrestrial vehicle, the most efficient module would probably be the car navigation system. Whatever the design of the architecture of the vehicle management device, it will probably be necessary to use processors which are compatible with the main standards of the automotive or aerospace industry, notably in terms of reliability, endurance and safety. For instance, on an aircraft, the FMC may comprise two redundant processing capabilities, as well as redundant data buses and data storage facilities. Also data exchange standard formats have been defined in both industries and have to be complied with.

The Vehicle Energy Management computer calculates a number of outputs 650 which are made available to the user in a dynamic and integrated way.

Energy consumption per route segment per activity, 651, is calculated based on the energy consumption parameters, the energy consumption mode, and the environmental parameters captured by the sensors. This calculation can be made before departure, when preparing the mission, and it will be repeated dynamically while the vehicle is en-route, at defined intervals, for instance at a frequency between 1 and 30 Hz, based on actual system and sensor data or information about environmental parameters ahead of the vehicle. The result of the calculation is displayed to the user on a gauge display of the type illustrated on figure 5.

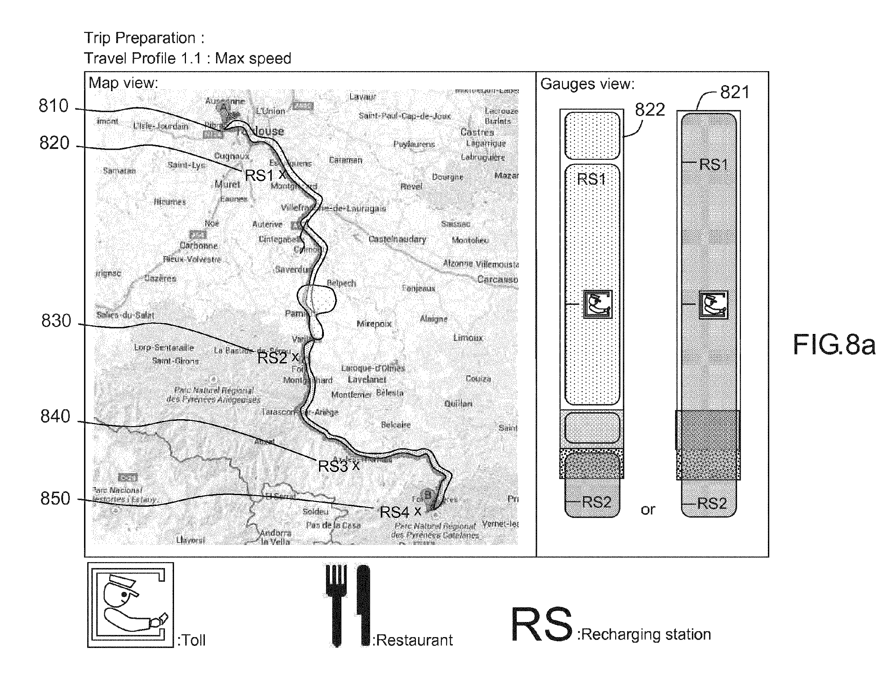

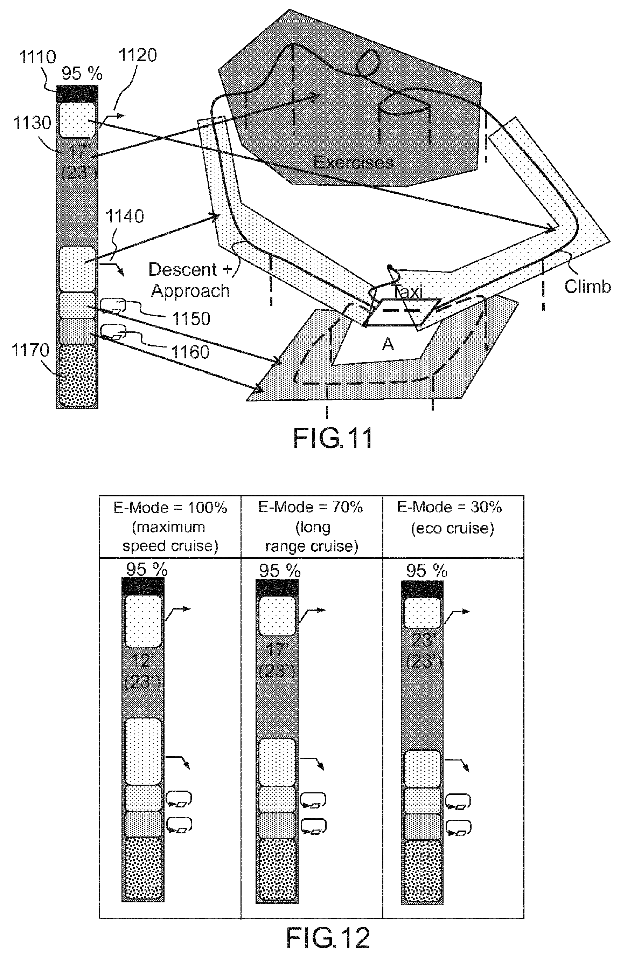

The user will be given the opportunity of performing 'what if' simulations, 652. These simulations being use case dependent, they will commented upon with more details in relation to the specific embodiments illustrated on figures 8a-8d and 12. The common features of these simulations are that the user is given the opportunity to enter variants of energy consumption modes or to alter the route (adding detours, new legs, new exercises, etc...) and measure the impact on the allocation of the remaining energy to the remaining activities, two gauge views may be visible on the dashboard, to allow a comparison between the initial scenario and the alternative scenario.

In variants of the invention, other functions may be made available to the user in addition to the ones listed above. For instance, a time to be spent on each segment/activity may be suggested to the user and displayed on the energy gauge display.

Also, more advanced 'what if' simulation functions may be offered to the user. For instance, a simulation of an allocation of a cost budget to a selection of activities, wherein said cost budget is a weighted combination of energy, time and range. For example, the driver could choose to minimize his/her driving time or environmental footprint, or he/she could choose to maximize endurance or range.

In a variant of the invention, data may be sent from the Vehicle energy management computer to a vehicle fleet management system, so that a fleet manager can perform on his/her end 'what if' simulations to optimize travels of the vehicles of the fleet present in an area or tasked with a similar activity potentially by re-allocating tasks.

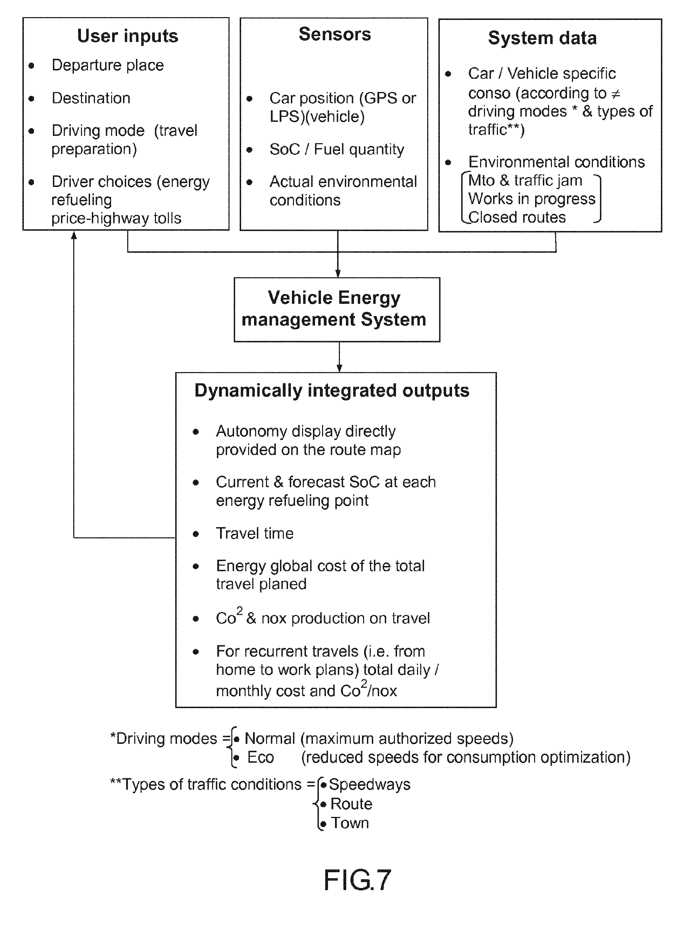

Figure 7 represents a functional architecture of a vehicle energy management system in a number of embodiments of the invention in automotive vehicles.

The architecture of the vehicle energy management system of the invention displayed on figure 7 is identical to the architecture displayed on figure 6, with some variants because of the specific usage of a terrestrial vehicle.

For instance, a driver of car will be given the opportunity to enter specific preferences, for instance using or not toll highways, using specific refueling or recharging stations based on price information. Also, constraints in terms of time of arrival at destination or at definite waypoints may be needed. Driving modes will be defined for instance in relation to the maximum authorized speeds on an itinerary: normal mode will be a mode where the driver will drive at the speed limit; eco mode will be a mode where the driver will drive at a reduced speed (i.e. a percentage of maximum speed which is lower than 100%) to optimize consumption.

Among the system data, some which will be notably important are the traffic conditions. They are normally provided by the navigation unit through which receives them from a service provider through a communication link. In lieu of real-time (or regularly updated) data, it is also possible to use parametric data, with for instance three type of traffic conditions, highway, road, urban, to which energy consumption parameters will be associated.

The sensors will capture vehicle position, fuel quantity (or State of Charge, SoC for an electrical vehicle) and actual environmental conditions, for instance wind, rain, road surface, slope,.

The range attainable with the remaining fuel/SoC can be displayed directly on the route map. A current and a forecast SoC can be displayed vis-à-vis each recharging station on the route. The total energy cost of the travel/mission may also be displayed, as well as the production of greenhouse gases, total driving time or total travel time.

Figures 8a to 8d represent a car navigation display with energy gauges in different configurations.

Figure 8a illustrates a scenario where a user prepares a trip and intends to use a normal energy consumption mode, i.e. drive at the speed limit.

Before the trip, the driver plans his/her travel and makes some decisions about the way to manage the global trip.

After having entered in the system the departure and destination points in the car navigation system, the driver will be presented with a number of proposed itineraries, with a number of associated parameters: total distance, estimated travel time or time of arrival, quality of traffic, etc.... According to the invention, the system will integrate other data, such as Refueling/Recharging Stations (RS), highway tolls, accommodation, food and/or leisure activities possibly associated to the RS, driving and meteorological conditions (coming from external systems), and the driver's choices on the driving mode (i.e. Max Speed - at the speed limit, Medium or Eco), implying different energy consumption rates on the legs of the different zones or sectors of the travel (i.e. "Urban" zone, "Road" zone, "Highway" zone, etc ...) and the RS stop-over choices.

In the example of figure 8a, the departure point is the city of Toulouse (France), 810, and the destination point the ski resort of Les Angles (France), 850, we assume that the driver chooses the Max Speed mode, but decides not to stop at RS1, 820, shortly after the departure.

The list of zones/sectors and legs, with the associated driving modes and the energy consumptions is displayed on the table below (with parts of the trip which cannot be travelled in bold characters).

| Sector | Type of Zone | Distance (km) | from | to | E-Mode / Speed | Autonom y (km) | E-Cons. | Cumulated Cons |
|---|---|---|---|---|---|---|---|---|
| | | | | | | | | |
| S1 | Town | 3 | Departure | N124 | Normal / 50 km/h | 80 | 0,0375 | 0,0375 |
| S2 | Highway (lmtd) | 20 | N124 | A61 | Normal / 90 km/h | 130 | 0,1538 | 0,1913 |
| S3 | Highway | 57 | A61 + A66 | // PAMIERS | Normal / 130 km/h | 80 | 0,7125 | 0,9038 |
| **S4** | **Highway (lmtd)** | **17** | **E9-N20 Pamiers** | **FOIX** | **Normal / 110 km/h** | **100** | **0,1700** | **1,0738** |
| **S5** | **Highway (lmtd)** | **17** | **FOIX** | **TARASCON/AR.** | **Normal / 110 km/h** | **100** | **0,1700** | **1,2438** |
| **S6** | **Road** | **80** | **TARASCON/AR.** | **LES ANGLES** | **Normal / 90 km/h** | **110** | **0,7273** | **1,9711** |
| **S7** | **Town** | **20** | **TARASCON/AR.** | **LES ANGLES** | **Normal / 50 km/h** | **80** | **0,2500** | **2,2211** |

In an embodiment, the system will display to the driver at the time of planning the trip a totally red gauge, 821, meaning that the solution is not acceptable, because the consumption is too high to reach RS2.

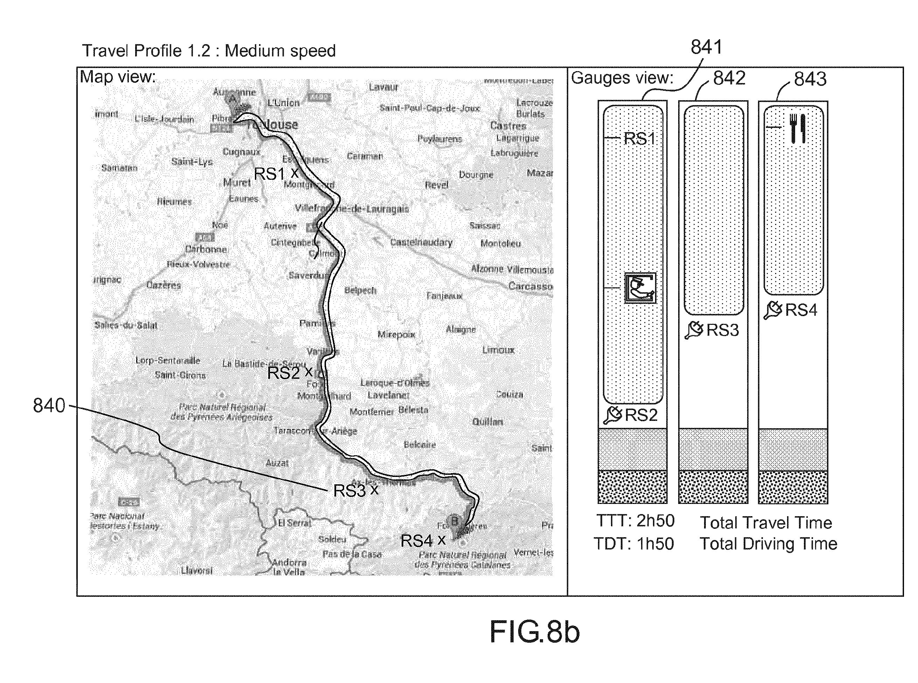

The driver could choose to stop at RS1, but it doesn't make sense, as it is time-consuming and useless. The driver will then try to find a less consuming solution, depicted on figure 8b, which is an example of re-planning what if simulation.

Because the quantity of energy that was missing to reach directly RS2 was small, the driver runs a what if scenario by modifying the driving mode, changing from "Max Speed" to "Eco" on one or a plurality of zones of the "Departure to RS2" leg.

With reference to figure 8b, by changing the driving mode on the most expensive zone (S3 = Highway at a normal speed) from "Max Speed" to "Eco" (see table below), the driver gets the possibility to reach directly RS2 with a sufficient margin, despite a possible short use of "reserve". Assuming a stop at RS3, 840 (for a recharging of around 40% consummated on that short leg), the system will show 3 parallel gauges, 841, 842, 843 for the 3 legs and calculate a Total Driving Time of 1H50 and a Total Travel Time of 2H50.

| Sector | Type of Zone | Distance (km) | from | to | E-Mode / Speed | Autonom y (km) | E-Cons. | Cumulated Cons |
|---|---|---|---|---|---|---|---|---|
| | | | | | | | | |
| S1 | Town | 3 | Departure | N124 | Normal / 50 km/h | 80 | 0,0375 | 0,0375 |
| S2 | Highway (lmtd) | 20 | N124 | A61 | Normal / 90 km/h | 130 | 0,1538 | 0,1913 |
| S3 new | Highway | 57 | A61 + A66 | // PAMIERS | Economy / 110 km/h | 100 | 0,5700 | 0,7613 |
| S4 | Highway (lmtd) | 17 | E9-N20 Pamiers | FOIX | Normal / 110 km/h | 100 | 0,1700 | 0,9313 |
| RS2 | Refueling/reloading at FOIX | | | | | | | |
| S5 | Highway (lmtd) | 17 | FOIX | TARASCON/AR. | Normal / 110 km/h | 100 | 0,1700 | 0,1700 |
| S6 | Road | 30 | TARASCON/AR. | AX-LES-TH. | Normal / 90 km/h | 110 | 0,2727 | 0,4427 |
| RS2 | Refueling/reloading at AX-LES-THERMES | | | | | | | |
| S7 | Town | 20 | AX-LES-TH and ot | her villages | Normal / 50 km/h | 80 | 0,2500 | 0,2500 |
| S8 | Road | 50 | AX-LES-TH. | LES ANGLES | Normal / 90 km/h | 110 | 0,4545 | 0,7045 |

The values given above are illustrative examples only.

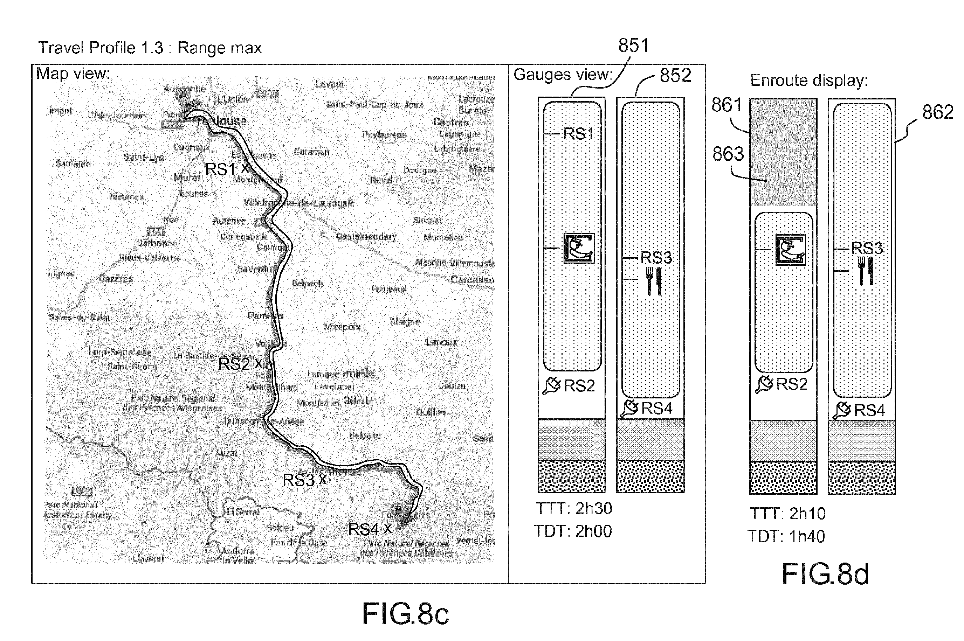

Concerning legs "RS2 to RS3" and "RS3 to RS4", the driver sees the same small quantity of energy missing to reach directly RS4, in only one leg, which could be done, subject to some adaptation of the driving mode. This example of an optimization what if simulation is depicted on figure 8c.

The expected result will be obtained by reducing the consumption successively on all the remaining sectors, as shown of the table below.

| Sector | Type of Zone | Distance (km) | from | to | E-Mode / Speed | Autonomy (km) | E-Cons. | Cumulated Cons |
|---|---|---|---|---|---|---|---|---|
| | | | | | | | | |
| S1 | Town | 3 | Departure | N124 | Normal / 50 km/h | 80 | 0,0375 | 0,0375 |
| S2 | Highway (lmtd) | 20 | N124 | A61 | Normal / 90 km/h | 130 | 0,1538 | 0,1913 |
| S3 new | Highway | 57 | A61 + A66 | // PAMIERS | Economy / 11 0 km/h | 100 | 0,5700 | 0,7613 |
| S4 new | Highway (lmtd) | 17 | E9-N20 Pamiers | FOIX | Eco-forte / 90 km/h | 130 | 0,1308 | 0,8921 |
| RS2 | Refueling/reloading at FOIX | | | | | reduced time for Reloading | | |
| S5 new | Highway (lmtd) | 17 | FOIX | TARASCON/AR. | Eco-forte / 90 km/h | 130 | 0,1308 | 0,1308 |
| S6 new | Road | 30 | TARASCON/AR. | AX-LES-TH. | Economy / 80 km/h | 130 | 0,2308 | 0,3615 |
| RS3 | Refueling/reloading not necessary at AX-LES-THERMES | | | | | | | |
| S7 new | Town | 20 | AX-LES-TH and other villages | | Economy / 40 km/h | 100 | 0,2000 | 0,5615 |
| S8 new | Road | 50 | AX-LES-TH. | LES ANGLES | Economy / 80 km/h | 130 | 0,3846 | 0,9462 |

Note that for sector 5 (highway limited to 110 km/h) the driving mode is downgraded from Medium to Eco mode, and that for sector 6 and 8 (road) and 7 (urban), it is downgraded from Max Speed to Eco mode.

With reference to figure 8C, the system finally shows only two parallel gauges 851, 852 for 2 legs and different values for Total Driving Time (2H00 instead of 1H50) and Total Travel Time (2H30 instead of 2H50).

We may assume that the driver, with the help of the system, has the choice to make a number of different acceptable decisions, and the final choice will be made according to the priorities of the user on this travel:
- If the driver is in a hurry to reach the destination or prefers to ensure a low level of consumption (price and low gas emission), the last solution (the one of figure 8c) is the best.
- If he is in a holiday/touristic travel and wishes to reduce the Driving Time to get more time to visit or go to the restaurant during the recharging stop at RS3 around midday, it will be better to come back to the solution provided with 3 legs in Fig. 8b.

These examples illustrate the purpose of the system of the invention, i.e. to help drivers to make the best decision on the spot by calculating quickly the consequences of different options. Of course, in the example above, we didn't take into account all external data, which could lead to different situations (actual consumption, better or worse, road and meteorological conditions, diverting itineraries or unforeseen events that would be instantaneously integrated by the system to update the information provided to the driver.

Figure 8d represents the gauges 861, 862 displayed during the travel, with the upper part of the gauge showing in dark, all along the leg, the consumed quantities, 863.

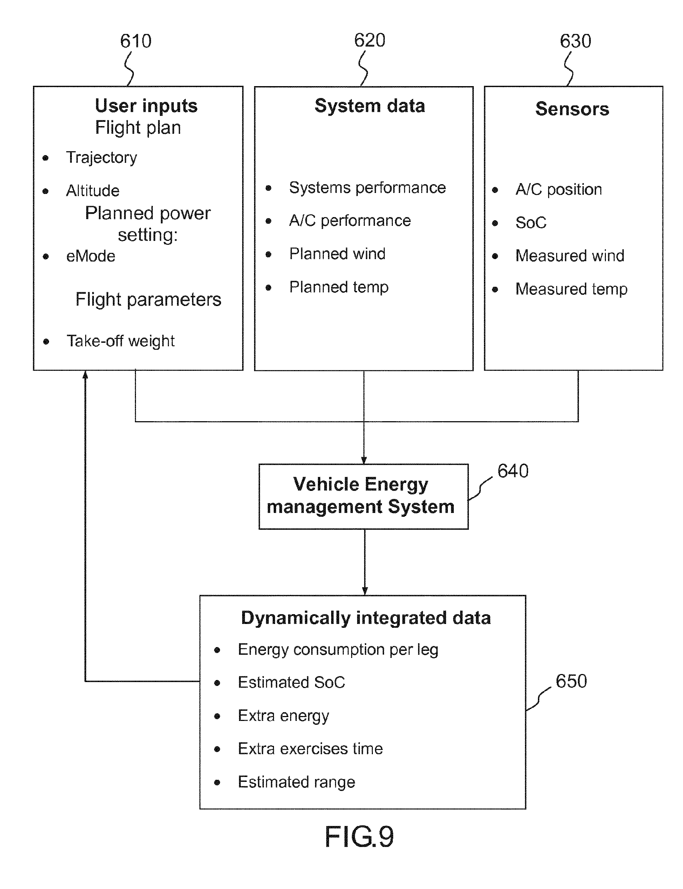

Figure 9 represents a functional architecture of a vehicle energy management system in a number of embodiments of the invention in aerospace vehicles.

Among the user inputs, elements of the route planning, 610, which characterize a flight are a combination of waypoints on the ground and altitudes which are entered in the flight plan that may contain altitude information. A flight plan is generally prepared before the mission, possibly but not necessarily on a specific computer not located on-board. The flight plan is then transferred to the flight management computer. The take-off weight is an important user input. It can also be a system data calculated from the SoC of the tanks, the number of passengers and the cargo. The planned power settings for each leg (or by default for the whole plan) will also be entered by the user.

Among the System data, 620, the systems performance and the A/C performance comprise level flight speed as a function of power, weight, altitude and other parameters, climb rate as a function of power, weight, altitude and other parameters, glide ratio as a function of weight, altitude and other parameters etc. The planned wind and temperature are also important parameters, because they will significantly impact, notably the first parameter, the energy consumption.

The sensors, 630, will provide the A/C position, the SoC and the measured wind and temperature. In case of strong headwind, the system will take into account that the ground speed will be reduced, thus increasing consumption for the leg.

The Dynamically Integrated Outputs 650 will include, among possible other variables, the Energy consumption per leg, the Estimated SoC, the Estimated Range, the Extra energy and its corresponding Estimated Range. When the aircraft has a specific mission, for example exercises, for a training aircraft, an estimated exercises time, or the number of holding patterns it is possible to fly in case of immediate return.

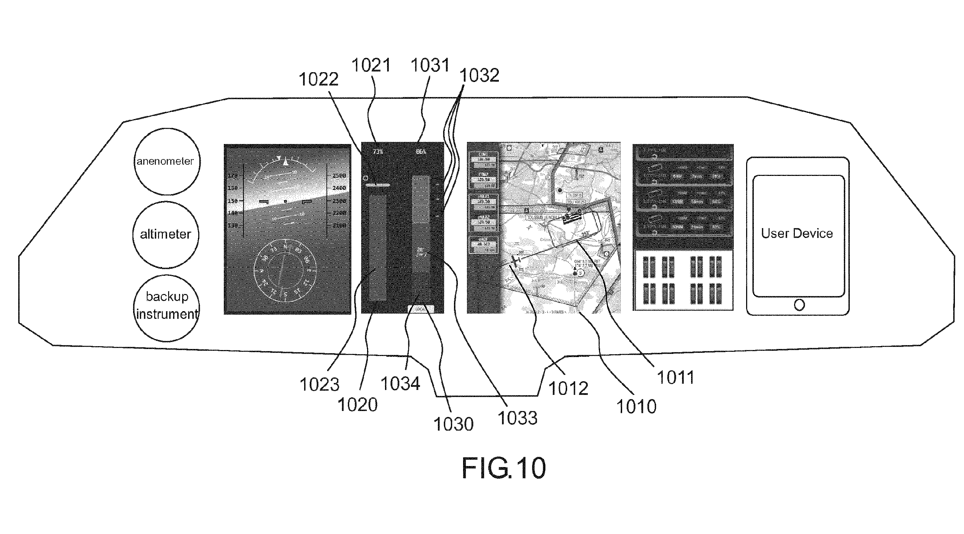

Figure 10 represents a cockpit display unit with an embodiment of the invention.

The dashboard represented on the figure is for a training aircraft of a generic type. On the display 1010, the flight plan 1011 which has been entered before departure is depicted, with the position of the aircraft 1012.

A first gauge (Power gauge) 1020 displays:
- the Power preset choice (1022);
- the actual instantaneous power used (1021 in % and 1023 in quantity).

A second gauge (Energy Gauge) 1030 displays the following additional information:
- The current SoC 1031 (in percentage of Total charge and graphically depicted);
- The consumption of planned holding patterns 1032 in which climb and descent are included;
- The computed extra energy at planned energy consumption mode 1033 (with an indication of the time planned to be spent on this activity with another indication - in parenthesis - of the time spent on this activity in the economy mode;
- Potentially the final reserve 1034.

It is advantageous to locate the first and the second gauges close to one another so that the pilot is able to instantaneously see and evaluate the consequences of the 'what if' simulations.

As a variant, times spent on all activities can also be displayed, with the time spent if flying in eco-mode.

Figure 11 represents the gauge of figure 5 with a match to the activities of an aircraft.

The gauge comprises symbols representative of the activity/flight phases matching those defined in the flight plan of figure 4b:
- Climb, 1120;
- Exercises, 1130;
- Descent and approach, 1140;
- Two possible patterns 1150 and 1160.

The consumption to date and the Current SoC, 1110, and the reserve 1170 are also potentially displayed.

Figure 12 represents the gauge of figure 11 flight session with different energy consumption modes.

On the left gauge, the E-Mode is configured with a cruise speed at the maximum speed, so that a minimum time will be spent on the exercise activity. On the middle gauge, the E-Mode is configured with a cruise speed at an average speed, so that an average time will be spent on the exercise activity. On the right gauge, the E-Mode is configured so that a maximum time will be spent on the exercise activity.

The E-Mode can be selected between a discrete number of options or as a continuous value. It can be input using a press button, a wheel, a pedal, a mouse, a ball, a joystick. The E-Mode can be input as a 'what if' simulation or as an operative mode. The results of one or more of the 'what if' simulations can be displayed simultaneously on a plurality of gauges or as sliding views on a same gauge, the sliding being controllable by the pilot.

The examples disclosed in this specification are only illustrative of some embodiments of the invention. They do not in any manner limit the scope of said invention which is defined by the appended claims.

## Claims

1. A vehicle route management system comprising :
- a user input interface (610) configured to allow the user to input a route with a plurality of waypoints, said waypoints defining segments, each segment associated with an activity and an energy consumption mode;
- a plurality of sensors (630) configured to provide in real time a position of the vehicle relative to the route, an amount of remaining energy and measurements of variables impacting instantaneous energy consumption;
- a calculation unit (640) configured to:
o associate a predicted energy consumption to each segment of the route, based on vehicle features, segment features and the energy consumption mode associated by the user with the segment;
o compute a predicted total energy consumption for the route;
o adjust the predicted energy consumption associated to each segment of the route and the total energy consumption for the route based on outputs from the plurality of sensors;
- a display unit (500) configured to present to the user outputs of the calculation unit and outputs of the some of the plurality of sensors;
wherein the display unit is further configured to graphically present to the user the predicted total energy consumption for the route by activity.

2. The vehicle route management system of claim 1, wherein the calculation unit is further configured to simulate an impact of a modification of the inputs on the predicted total energy consumption for the route by activity.

3. The vehicle route management system of one of claims 1 to 2, wherein the user input interface comprises one or more of a keyboard, a press button, a wheel, a pedal, a mouse, a ball, a joystick, a tactile area on the display unit, a vocal interface.

4. The vehicle route management system of claim 3, wherein the user input interface for inputting the energy consumption mode is one or more of a press button, a wheel, a pedal, a mouse, a ball, a joystick.

5. The vehicle route management system of one of claims 1 to 4, wherein the energy consumption mode is a discrete value.

6. The vehicle route management system of one of claims 1 to 5, wherein the energy consumption mode is one of a continuous value and a semi-continuous value.

7. The vehicle route management system of one of claims 1 to 6, wherein at least one of the energy consumption mode and the activity associated to a segment has default values.

8. The vehicle route management system of one of claims 1 to 7, wherein the plurality of sensors comprises a GNSS receiver,

9. The vehicle route management system of one of claims 1 to 8, wherein the calculation unit is further configured to use as input a history of routes previously travelled by the vehicle with the user or another user.

10. The vehicle route management system of one of claims 1 to 9, wherein the display unit comprises two gauges, one for displaying information on preset power and instantaneous power and one for displaying information on energy consumption.

11. The vehicle route management system of one of claims 2 to 10, wherein the calculation unit is further configured to simulate an allocation of a cost budget to a selection of activities, wherein said cost budget is a weighted combination of energy, time and range.

12. The vehicle route management system of one of claims 1 to 11, wherein the vehicle is an automotive vehicle.

13. The vehicle route management system of claim 12, wherein the predicted energy consumption of a segment depends on at least one of a vertical profile of the segment, current traffic conditions on the segment, predicted traffic conditions on the segment, a driving style of the user.

14. The vehicle route management system of one of claims 11 to 13, wherein the calculation unit is further configured to compute a remaining autonomy at each refueling station on the route and a travel time for the route taking into account refueling time.

15. The vehicle route management system of one of claims 11 to 14, wherein the calculation unit takes into account at least one of an age of the vehicle, a maintenance status of the vehicle, an age of roads on the route, a maintenance status of the road.

16. The vehicle route management system of one of claims 1 to 10, wherein the vehicle is a flying vehicle.

17. The vehicle route management system of claim 16, wherein the user input interface is an interface of a flight management system of the flying vehicle.

18. The vehicle route management system of one of claims 16 to 17, wherein an activity on a segment is selected in a list comprising taxiing, climbing, cruising, exercising, descending, approaching, landing and diverting.

19. The vehicle route management system of one of claims 17 to 18, wherein the plurality of sensors comprises an anemometer and a temperature sensor.

20. The vehicle route management system of one of claims 16 to 19, wherein the calculation unit takes into account at least one of predicted wind, predicted temperature, actual wind and actual temperature to compute the predicted and actual energy consumptions on a segment.

21. A method for managing a route of a vehicle, said method comprising:
- Having a user input in a user input interface a route with a plurality of waypoints, said waypoints defining segments, each segment associated with an activity and an energy consumption mode;
- Capturing from a plurality of sensors a real time a position of the vehicle relative to the route, an amount of remaining energy and measurements of variables impacting instantaneous energy consumption;
- Causing a calculation unit to:
∘ associate a predicted energy consumption to each segment of the route, based on vehicle features, segment features and the energy consumption mode associated by the user with the segment;
∘ compute a predicted total energy consumption for the route;
∘ adjust the predicted energy consumption associated to each segment of the route and the total energy consumption for the route based on outputs from the plurality of sensors;
- Presenting to the user on a display unit outputs of the calculation unit and outputs of some of the plurality of sensors;
wherein the presenting comprises graphically presenting to the user the predicted total energy consumption for the route by activity.

22. A computer program for managing a route of a vehicle when executed on a computer, comprising:
- User input interface components configured to allow a user to input a route with a plurality of waypoints, said waypoints defining segments, each segment associated with an activity and an energy consumption mode;
- Sensor processing instructions configured for capturing from a plurality of sensors a real time a position of the vehicle relative to the route, an amount of remaining energy and measurements of variables impacting instantaneous energy consumption;
- Data processing instructions configured to:
∘ associate a predicted energy consumption to each segment of the route, based on vehicle features, segment features and the energy consumption mode associated by the user with the segment;
∘ compute a predicted total energy consumption for the route;
∘ adjust the predicted energy consumption associated to each segment of the route and the total energy consumption for the route based on outputs from the plurality of sensors;
- Presentation components configured to present to the user on a display unit outputs of the data processing instructions and outputs of some of the plurality of sensors;
wherein the presentation components are further configured to graphically present to the user the predicted total energy consumption for the route by activity.

23. A vehicle route management unit comprising :
- an interface to a user input interface (610) configured to allow the user to input a route with a plurality of waypoints, said waypoints defining segments, each segment associated with an activity and an energy consumption mode;
- an interface to a plurality of sensors (630) configured to provide in real time a position of the vehicle relative to the route, an amount of remaining energy and measurements of variables impacting instantaneous energy consumption;
- a calculation unit (640) configured to:
∘ associate a predicted energy consumption to each segment of the route, based on vehicle features, segment features and the energy consumption mode associated by the user with the segment;
∘ compute a predicted total energy consumption for the route;
∘ adjust the predicted energy consumption associated to each segment of the route and the total energy consumption for the route based on outputs from the plurality of sensors;
- an interface to a display unit (500) configured to present to the user outputs of the calculation unit, outputs of some of the plurality of sensors and graphical views of the predicted total energy consumption for the route by activity.
